# EUROPÄISCHE PATENTSCHRIFT

(11) **EP 0 361 411 B1**
(45) Veröffentlichungstag und Bekanntmachung des Hinweises auf die Patenterteilung: **21.07.1993**
(21) Anmeldenummer: 89117794.1
(22) Anmeldetag: 27.09.1989
(51) Int. Cl.: F16K 5/00, F16K 3/00

(54) **Wasserhahn**
Tap
Robinet d'eau

(30) Priorität: 27.09.1988 DE 3833177
(43) Veröffentlichungstag der Anmeldung: 04.04.1990
(73) Patentinhaber: Ashauer, Ernst, Dipl.-Ing., D-69469 Weinheim (DE)
(72) Erfinder: Ashauer, Ernst, Dipl.-Ing., D-69469 Weinheim (DE)
(74) Vertreter: Gramm, Werner, Prof., Dipl.-Ing.

(56) Entgegenhaltungen:
- GB-A- 1 381 391
- GB-A- 2 046 881
- US-A- 2 642 256
- US-A- 3 507 475

## Beschreibung

Die Erfindung betrifft einen Wasserhahn, mit einem schiebbar gelagerten Absperrventil, das in einer Verschlußstellung abdichtend an einem Ventilsitz anliegt und in eine Öffnungsstellung von dem Ventilsitz wegschiebbar ist, und mit einem außerhalb des Gehäuses angeordneten Betätigungsglied , wobei das Absperrventil fest mit einem Führungselement verbunden ist, das mit dem aus dem Gehäuse ragenden Betätigungsglied gekoppelt ist.

Es ist bekannt, den Wasserfluß durch einen Wasserhahn zu regulieren, der ein drehbares Küken aufweist. Das Küken ist in seiner zylindrischen Mantelwand mit einer Öffnung versehen, so daß in einem vorbestimmten Drehbereich die Öffnung des Kükens mit einem Leitungskanal fluchtet, so daß eine Verbindung zwischen einer mit dem Innern des Kükens kommunizierenden Leitung mit der dazu senkrecht stehenden und an der Mantelwand des Kükens endenden Leitung hergestellt ist.

Es ist ferner bekannt, ein Absperrventil mit einer Spindel zu verbinden, so daß eine Drehbewegung an dem Betätigungsglied über die Gewindesteigung zu einer Veränderung der relativen Lage zwischen Ventilsitz und Absperrventil führt.

Es ist auch, beispielsweise durch die französische Patentschrift 1 494 302, bekannt, Wasserhähne mit einem Druckknopf zu versehen, durch den das Absperrventil von seinem Ventilsitz weggedrückt wird. Die Rückstellung in die Schließstellung erfolgt mit Hilfe einer den Druckknopf von dem Wasserhahngehäuse wegdrückenden Rückstellfeder.

Die Abdichtung eines Wasserhahns mit Hilfe eines mit einem Ventilsitz zusammenwirkenden Absperrventils ist an sich vorteilhaft. Die bekannten Konstruktionen derartiger Wasserhähne weisen den Nachteil auf, daß einer Verkleinerung ihres Aufbaus prinzipielle Hindernisse entgegenstehen, die daraus resultieren, daß das Betätigungsglied für die Verschiebebewegung in Bewegungsrichtung des Absperrventils hinter diesem angeordnet ist. Zur Realisierung der Verschiebebewegung, Lagerung des Absperrventils und seines Ventilsitzes sowie für das Betätigungsglied wird eine Mindestausdehnung in einer Ausdehnungsrichtung benötigt. Die für die Verschiebung des Ansperrventils benötigten Kräfte haben einen ungünstigen Angriffspunkt, so daß eine leichte Verschiebbarkeit des Absperrventils nur schwierig realisierbar ist. Der Übersetzung der Verschiebekraft mit Hilfe eines Schraubgewindes einer Spindel stehen viele Anwendungsfälle entgegen, bei denen der Wasserhahn im wesentlichen aus Kunststoffteilen aufgebaut sein soll, wie beispielsweise bei Wasserhähnen für Campingzwecke, die in Wohnwagen, Wohnmobilen, Booten o. dgl. eingesetzt werden.

Ein Wasserhahn der eingangs erwähnten Art ist aus US-A-2 642 256 bekannt. Dabei ist ein translatorisch verschiebbares Absperrventil mit einem ringförmigen Kragen versehen und in einer Hülse geführt. In eine nach außen offene Nut des ringförmigen Kragens ragt ein Stift eines Betätigungsgriffes. Da der Kragen in einer radialen Ausnehmung der Hülse translatorisch bewegbar ist, kommt ihm eine gewisse Führungsfunktion zu. Eine spiralförmige Nut in der Hülse sorgt bei einer Drehbewegung des Betätigungsgliedes für eine Verschiebung der Hülse, die einen Ventilsitz für das Absperrventil aufweist, so daß mit einer Drehbewegung des Betätigungsgliedes das Ventil geöffnet und geschlossen werden kann. Das Ventil ist als Absperrventil einer Wasserleitung ausgebildet und weist daher axiale Anschlußgewinde auf. Ein Wasserhahn im eigentlichen Sinne ist somit nicht realisiert. Da das Betätigungselement außen am zylindrischen Mantel des Absperrventils angreift, werden auf das Absperrventil Drehmomente ausgeübt, die einerseits eine Undichtigkeit hervorrufen können, andererseits zum Klemmen des Absperrventils in der Hülse führen können.

Der Erfindung liegt daher die Aufgabe zugrunde, einen Wasserhahn der eingangs erwähnten Art so auszubilden, daß der Wasserhahn mit einem kompakten Aufbau erstellbar und das Betätigungsglied an einem günstigen Angriffspunkt für die Durchführung der Verschiebebewegung positionierbar ist.

Diese Aufgabe wird erfindungsgemäß bei einem Wasserhahn der eingangs erwähnten Art dadurch gelöst, daß sich das Führungselement parallel zur Verschieberichtung neben dem Ventilsitz erstreckt und daß das Betätigungsglied neben dem Ventilsitz aus dem Gehäuse ragt.

Bei dem erfindungsgemäßen Wasserhahn befindet sich neben dem Absperrventil ein mit diesem verbundenes, vorzugsweise durch eine Führungsplatte gebildetes, Führungselement, das sich neben den Ventilsitz erstreckt. Das Betätigungsglied ist mit dem Führungselement gekoppelt, so daß die Betätigung über das neben dem Ventilsitz angeordnete Führungselement erfolgt. Bei einer horizontalen Bewegungsrichtung des Absperrventils befindet sich das Führungselement beispielsweise seitlich von dem Ventilsitz, und es ist ein seitliches Betätigungsglied vorgesehen. Dieses Betätigungsglied kann ein einfacher Schiebergriff sein, ist aber vorzugsweise ein in dem Gehäuse drehbar gelagerter Drehhebel, dessen Drehbewegung mit einem geeigneten Getriebe, das in einfacher Ausführungsform eine Stift-Langloch-Verbindung sein kann, in die Schiebebewegung des Führungselements - und damit des Absperrventils - umgesetzt wird. Da das Betätigungsglied etwa in Höhe des Absperrventils bzw. Ventilsitzes angreift, werden günstige Hebelverhältnisse erreicht, die für eine leichte Verschiebbarkeit des Absperrventils vorteilhaft sind. Die bei den bekannten Konstruktionen erforderliche Übertragung der Verschiebebewegung über einen relativ langen linearen Übertragungsweg auf das Absperrventil erzeugt regelmäßig Kippmomente für das Absperrventil, wodurch dieses einer erhöhten Gleitreibung unterliegt und zum Klemmen neigt.

Der Ventilsitz ist in einer bevorzugten und sehr kompakt aufbaubaren Ausführungsform der Erfindung auf einer Basisplatte angeordnet, auf der eine erste schmale Kante der Führungsplatte gleitet. Die dieser ersten schmalen Kante gegenüberliegende schmale Kante stützt sich vorzugsweise an einer Gehäusewand ab, so daß etwaige Drehmomente, die insbesondere bei der Ausbildung des Betätigungsgliedes als Drehhebel auftreten, durch die Basisplatte und die gegenüberliegende Gehäusewand abgefangen werden. Dabei ist es zweckmäßig, wenn die Abstützung der zweiten schmalen Kante an der Gehäusewand nur über einen dünnen Stift erfolgt, wodurch einerseits Material eingespart wird, andererseits die Gleitreibung verringert wird.

Eine sehr kompakte und funktionssichere Ausführung des Wasserhahns wird erreicht, wenn das Absperrventil durch einen Absperrkolben gebildet ist, der in einem den Ventilsitz aufnehmenden Zylinder geführt ist, wobei vorzugsweise der Absperrkolben und die Führungsplatte einstückig miteinander verbunden sind. In dieser Ausführungsform sorgt der Zylinder für eine lineare Führung des Absperrkolbens, während die Führungsplatte zum Auffangen der Drehmomente dient. Hierdurch wird eine hohe Funktionssicherheit bei der Absperrung des Wasserstroms erreicht.

Die Erfindung soll im folgenden anhand von in der Zeichnung dargestellten Ausführungsbeispielen näher erläutert werden. Es zeigen:
- Figur 1 -: eine explodierte Darstellung der Teile eines Wasserhahns
- Figur 2 -: eine explodierte Darstellung der Teile eines Wasserhahns analog Figur 1, der zusätzlich mit einer Mischeinrichtung versehen ist.

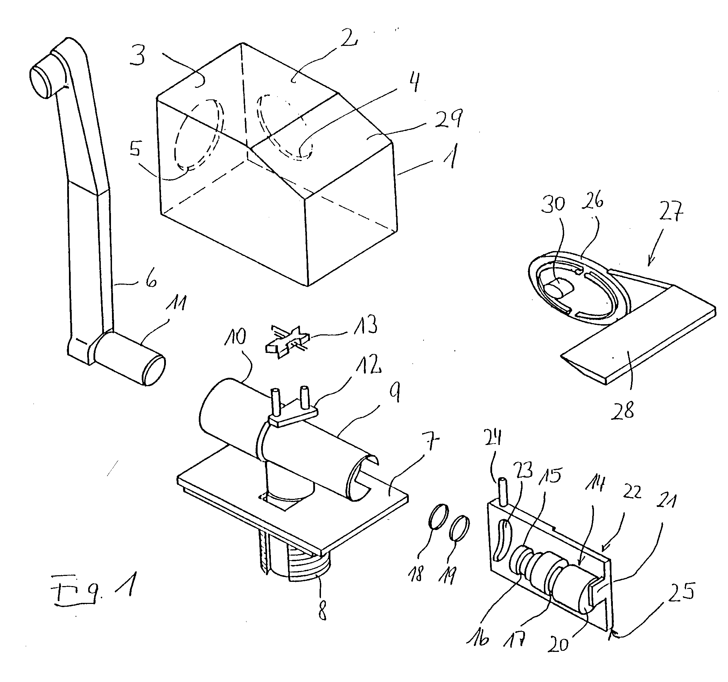

Figur 1 zeigt eine unten offene Gehäusekappe 1, die an zwei senkrecht zueinander stehenden Wänden 2, 3 jeweils eine kreisförmige Öffnung 4, 5 aufweist. In die stirnseitige kreisförmige Öffnung 5 ist ein Auslauf 6 einschiebbar, der somit um eine durch den Mittelpunkt der kreisförmigen Öffnung 5 laufenden Achse drehbar ist. Die Gehäusekappe 1 wird durch eine Basisplatte 7 zu einem geschlossenen Gehäuse ergänzt, an deren Unterseite sich ein Wasserzulauf 8 und an deren Oberseite sich ein senkrecht zu dem Wasserzulauf 8 erstreckter Zylinder 9 befinden. Der Wasserzulauf 8 setzt sich an der Oberseite der Basisplatte 7 fort, bis er in den Zylinder 9 mündet. Der Zylinder 9 weist innen einen (nicht dargestellten) üblichen Ventilsitz auf und ist an einem Ende mit einer Aufweitung 10 versehen, in die ein Ansatz 11 des Auslaufs 6 einführbar ist. An seiner Oberseite weist der Zylinder 9 außen eine Halterung 12 für einen Mikroschalter 13 auf. In den Zylinder 9 ist ein als Absperrkolben 14 ausgebildetes Absperrelement einschiebbar. Der Absperrkolben 14 ist in üblicher Weise an seinem vorderen Ende 15 verjüngt. Der Ventilsitz weist eine entsprechende Negativform auf. Der Absperrkolben 14 ist mit zwei ringförmigen Nuten 16, 17 versehen, in die zwei O-Ringe 18, 19 einlegbar sind. Das hintere, nicht verjüngte Ende 20 des Absperrkolbens weist einen seitlich über die Kolbenkontur ragenden Ansatz 21 auf, der den hinteren Abschluß einer parallel zu dem Absperrkolben 14 erstreckten Führungsplatte 22 bildet. Die Führungsplatte 22 weist eine größere Länge als der Absperrkolben 14 auf, überragt also das vordere Ende 15 des Absperrkolbens 14. In diesem überragenden Teil der Führungsplatte 22 ist ein im wesentlichen vertikal stehendes Langloch 23 vorgesehen, das eine geringe Krümmung aufweist. Am vorderen Ende der Führungsplatte 22 ragt aus der oberen schmalen Kante ein dünner Stift 24 nach oben, der sich im montierten Zustand an der Innenseite der oberen Wand der Gehäusekappe 1 abstützt. Die untere schmale Kante 25 der Führungsplatte 22 gleitet auf der Basisplatte 7.

In die seitliche kreisförmige Öffnung 4 ist ein kreisförmiges Teil 26 eines als Betätigungsglied diendenden Drehhebels 27 einrastbar, dessen Betätigungsfahne 28 oberhalb der Gehäusekappe 1 drehbar ist. In einer Endstellung des Drehhebels 27, die der geschlossenen Stellung des Wasserhahns entspricht, liegt die Betätigungsfahne 28 auf einem hierfür abgeschrägten Abschnitt 29 auf der Oberseite der Gehäusekappe 1 auf.

Aus dem kreisförmigen Teil 26 des Drehhebels 27 ragt ein Stift 30 parallel zur Betätigungsfahne 28 nach innen hervor, der im montierten Zustand des Wasserhahns in das Langloch 23 eingreift. Die Stift-Langloch-Kopplung 30, 23 sorgt für eine Umsetzung der Drehbewegung des Drehhebels 27 in eine lineare Bewegung der Führungsplatte 22, wobei die erwähnte Krümmung des Langlochs 23 die Möglichkeit bietet, die Umsetzung der Drehbewegung in die lineare Verschiebebewegung zu beeinflussen.

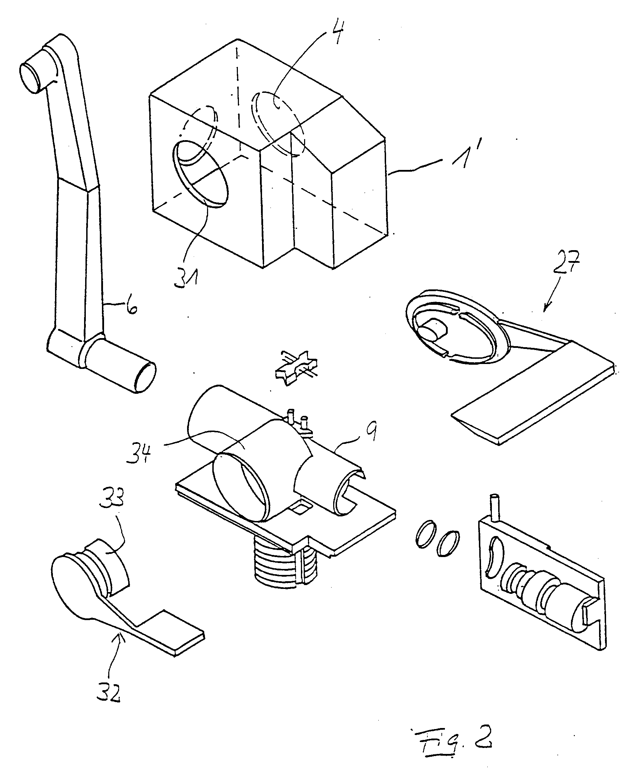

Das in Figur 2 dargestellte Ausführungsbeispiel ist in allen wesentlichen Teilen identisch mit dem in Figur 1 dargestellten Ausführungsbeispiel. Es zeigt lediglich eine Ausführungsform, bei dem eine Mischvorrichtung integriert ist, so daß durch den Zulauf 8 sowohl Warm- als auch Kaltwasser zuführbar ist. Die in Figur 1 verwendeten Bezugsziffer sind für alle gleichen Teile in Figur 2 übernommen worden.

Die Gehäusekappe 1′ weist in Figur 2 gegenüber der kreisförmigen Öffnung 4 eine zusätzliche kreisförmige Öffnung 31 auf, in der ein weiterer Drehhebel 32 eingerastet lagerbar ist.

Der Drehhebel 32 ragt mit einem zylindrischen Hohlwandteil 33 durch die Öffnung 31 hindurch in das Innere eines zylindrischen Ansatzes 34, der sich seitlich am Zylinder 9 befindet. Das zylindrische Hohlwandteil 33 weist in Umfangsrichtung einen Schlitz auf und ist gegenüber der Innenwand des zylindrischen Ansatzes 34 etwas überdimensioniert. Beim Einführen in den zylindrischen Ansatz 34 wird das zylindrische Hohlwandteil 33 in Richtung des Schlitzes zusammengedrückt, so daß die Wände des zylindrischen Hohlwandteils 33 abdichtend an der Innenwand des zylindrischen Ansatzes 34 anliegen, wie dies in der deutschen Patentschrift 30 19 924 näher erläutert ist. Das zylindrische Hohlwandteil 33 ermöglicht daher eine relative Regelung der beiden Wasserströme (kalt und warm) zueinander, also die Durchführung eines Mischvorganges. Das durch den Zulauf 8 fließende Wasser gelangt somit in die Mischkammer des zylindrischen Ansatzes 34 und wird durch eine stirnseitige Öffnung seitlich in den Zylinder 9 geführt. Der Ventilsitz des Zylinders 9 befindet sich in Auslaufrichtung hinter der stirnseitigen Öffnung des zylindrischen Ansatzes 34, so daß der gemischte Wasserstrom mit Hilfe des Absperrkolbens 14 absperrbar ist. Die O-Ringe 18, 19 sorgen für eine Abdichtung des Zylinderinnenvolumens in Richtung des Absperrkolbens 14.

Aus den Ausführungsbeispielen ist erkennbar, daß der erfindungsgemäße Wasserhahn mit einer geringen Höhe und einer geringen Breite realisierbar ist, wenn der Zylinder 9 sich über die Breite des Wasserhahns horizontal erstreckt. Beengten Einbaumaßen in Küchen von Wohnwagen, Wohnmobilen o. dgl. ist somit Rechnung getragen. Die Betätigung des Wasserhahns erfolgt durch die Drehhebel 27 bzw. 27 und 32 auf der Oberseite des Gehäuses 1 bzw. 1′, 7.

## Patentansprüche

1. Wasserhahn mit einem schiebbar gelagerten Absperrventil (14), das in einer Verschlußstellung abdichtend an einem Ventilsitz anliegt und in eine Öffnungsstellung von dem Ventilsitz wegschiebbar ist, und mit einem außerhalb des Gehäuses (1, 7; 1', 7) angeordneten Betätigungsglied (27), wobei das Absperrventil (14) fest mit einem Führungselement (22) verbunden ist, das mit dem aus dem Gehäuse (1, 7; 1', 7) ragenden Betätigungsglied (27) gekoppelt ist, **dadurch gekennzeichnet**, **daß** sich das Führungselement (22) parallel zur Verschieberichtung neben dem Ventilsitz erstreckt und daß das Betätigungsglied (27) neben dem Ventilsitz aus dem Gehäuse (1, 7; 1', 7) ragt.

2. Wasserhahn nach Anspruch 1, dadurch gekennzeichnet, daß das Führungselement eine Führungsplatte (22) ist.

3. Wasserhahn nach Anspruch 1 oder 2, dadurch gekennzeichnet, daß der Ventilsitz auf einer Basisplatte (7) angeordnet ist, auf der eine erste schmale Kante (25) des Führungselements (22) gleitet.

4. Wasserhahn nach Anspruch 3, dadurch gekennzeichnet, daß sich das Führungselement (22) an ihrer der ersten schmalen Kante (25) gegenüberliegenden schmalen Kante an einer Gehäusewand abstützt.

5. Wasserhahn nach Anspruch 4, dadurch gekennzeichnet, daß sich die zweite schmale Kante nur über einen dünnen Stift (24) an der Gehäusewand abstützt.

6. Wasserhahn nach einem der Ansprüche 1 bis 5, dadurch gekennzeichnet, daß das Betätigungsglied ein Drehhebel (27) ist.

7. Wasserhahn nach Anspruch 6, dadurch gekennzeichnet, daß der Drehhebel (27) in einer kreisförmigen Öffnung (4) des Gehäuses (1, 7; 1′, 7) eingeschnappt gelagert ist.

8. Wasserhahn nach Anspruch 6 oder 7, dadurch gekennzeichnet, daß die Kopplung zwischen Drehhebel (27) und Führungselement (22) eine Stift-Langloch-Verbindung (23, 30) ist.

9. Wasserhahn nach einem der Ansprüche 1 bis 8, dadurch gekennzeichnet, daß das Absperrventil durch einen Absperrkolben (14) gebildet ist, der in einem den Ventilsitz aufnehmenden Zylinder (9) geführt ist.

10. Wasserhahn nach Anspruch 9, dadurch gekennzeichnet, daß der Absperrkolben (14) und die Führungsplatte (22) einstückig miteinander verbunden sind.

## Claims

1. Tap having a slidably mounted shut-off valve (14) which in a closed position bears sealingly against a valve seating and can be moved away from the valve seating into an open position, and having an actuating member (27) arranged outside the housing (1, 7; 1', 7), the shut-off valve (14) being fixedly connected to a guide element (22) which is coupled to the actuating member (27) projecting out of the housing (1, 7; 1', 7), characterized in that the guide element (22) extends parallel to the direction of displacement next to the valve seating, and in that the actuating member (27) projects out of the housing (1, 7; 1', 7) next to the valve seating.

2. Tap according to Claim 1, characterized in that the guide element is a guide plate (22).

3. Tap according to Claim 1 or 2, characterized in that the valve seating is arranged on a base plate (7) on which a first narrow edge (25) of the guide element (22) slides.

4. Tap according to Claim 3, characterized in that the guide element (22) is supported on its narrow side opposite the first narrow side (25) against a housing wall.

5. Tap according to Claim 4, characterized in that the second narrow edge is supported against the housing wall only by way of a thin pin (24).

6. Tap according to one of Claims 1 to 5, characterized in that the actuating member is a rotary lever (27).

7. Tap according to Claim 6, characterized in that the rotary lever (27) is mounted latched into a circular opening (4) in the housing (1, 7; 1', 7).

8. Tap according to Claim 6 or 7, characterized in that the coupling between the rotary lever (27) and the guide element (22) is a pin-and-slot connection (23, 30).

9. Tap according to one of Claims 1 to 8, characterized in that the shut-off valve is formed by a shut-off piston (14) which is guided in a cylinder (9) receiving the valve seating.

10. Tap according to Claim 9, characterized in that the shut-off piston (14) and the guide plate (22) are connected in one piece to one another.

## Revendications

1. Robinet d'eau comportant une vanne d'arrêt mobile (14) qui s'applique de manière étanche sur un siège de vanne, en position de fermeture, et qui peut être éloignée de ce siège, en position d'ouverture, et comportant un organe de manoeuvre (27) disposé à l'extérieur du boisseau (1,7 ; 1',7), ladite vanne d'arrêt (14) étant assemblée rigidement à un élément de guidage (22) qui est accouplé à l'organe de manoeuvre (27) faisant saillie du boisseau (1,7 ; 1',7), caractérisé en ce que l'élément de guidage (27) s'étend parallèlement au sens de déplacement, à côté du siège de vanne, et que l'organe de manoeuvre (27) fait saillie du boisseau (1,7 ; 1', 7) à côté du siège de vanne.

2. Robinet d'eau selon la revendication 1, caractérisé en ce que l'élément de guidage est une plaquette de guidage (22).

3. Robinet d'eau selon la revendication 1 ou 2, caractérisé en ce que le siège de vanne est disposé sur une plaque de base (7) sur laquelle coulisse une première arête étroite (25) de l'élément de guidage (22).

4. Robinet d'eau selon la revendication 3, caractérisé en ce que l'élément de guidage (22) s'appuie sur une paroi de boisseau par son arête étroite placée en vis-à-vis de la première arête étroite (25).

5. Robinet d'eau selon la revendication 4, caractérisé en ce que la deuxième arête étroite ne s'appuie sur la paroi de boisseau que par une tige mince (24).

6. Robinet d'eau selon l'une des revendications 1 à 5, caractérisé en ce que l'élément de manoeuvre est un levier rotatif (27).

7. Robinet d'eau selon la revendication 6, caractérisé en ce que le levier rotatif (27) est monté par encliquetage dans une ouverture circulaire (4) du boisseau 1, 7 ; 1', 7).

8. Robinet d'eau selon la revendication 6 ou 7, caractérisé en ce que l'accouplement entre le levier rotatif (27) et l'élément de guidage (22) est un assemblage à tige et trou allongé (23, 30).

9. Robinet d'eau selon l'une des revendications 1 à 8, caractérisé en ce que la vanne d'arrêt est constitué d'un piston d'arrêt (14) qui est guidé dans un cylindre (9) recevant le siège de la vanne.

10. Robinet d'eau selon la revendication 9, caractérisé en ce que le piston d'arrêt (14) et la plaquette de guidage (22) constituent un ensemble d'une seule pièce.
